# FASCICULE DE BREVET EUROPEEN

(11) **EP 0 489 614 B1**
(45) Date de publication et mention de la délivrance du brevet: **15.03.1995**
(21) Numéro de dépôt: 91403129.9
(22) Date de dépôt: 20.11.1991
(51) Int. Cl.: B60L 5/38

(54) **Frotteur de captation du courant**
Stromabnehmer-Schleifstück
Current collector shoe

(30) Priorité: 04.12.1990 FR 9015146
(43) Date de publication de la demande: 10.06.1992
(73) Titulaire: R.A.T.P. REGIE AUTONOME DES TRANSPORTS PARISIENS Etablissement public à caractère industriel et commercial, 75271 Paris Cédex 06 (FR)
(72) Inventeur: Buttazzoni, Jean-Pierre, F-95270 Asnieres-Sur-Oise (FR)
(74) Mandataire: Rodhain, Claude

(56) Documents cités:
- DE-B- 1 119 903
- US-A- 3 509 292

## Description

L'invention concerne un frotteur, notamment un frotteur de captation du courant fourni par un troisième rail pour véhicule roulant ferré.

Le troisième rail d'alimentation en courant des véhicules roulant ferrés est utilisé dans la majeure partie des réseaux ferroviaires. Le courant est amené au véhicule roulant ferré par le biais d'un frotteur comprenant un ensemble de fixation du frotteur à une poutre du véhicule, une semelle de contact et un moyen amortisseur disposé entre la semelle de contact et l'ensemble de fixation du frotteur pour maintenir en permanence la semelle en contact avec le troisième rail par la face supérieure de celui-ci pendant le déplacement du véhicule.

On connait déjà plusieurs types de frotteurs pour l'alimentation en courant des véhicules ferrés dont les principaux sont du type panto (Frotteur FAIVELEY première génération), ciseaux (frotteur FAIVELEY seconde génération), à amortisseur (frotteur FERRAZ). Pour ces frotteurs connus la semelle est maintenue en contact sur le troisième rail par des bras rigides articulés formant amortisseur. Le manque de souplesse du système amortisseur conjugué à la fragilité de certains bras entraîne un nombre important d'avaries lesquelles ont des incidences néfastes pour le réseau ferroviaire. Parmi celles-ci on peut citer la rupture des bras inférieurs des frotteurs du type panto ou l'usure prématurée de leurs axes d'articulation, la rupture des bras des frotteurs du type à amortisseur due aux chocs subis lors du passage du matériel roulant sur des coupons. Toutes ces avaries entraînent un coût d'entretien très important des frotteurs connus lequel s'ajoute à un coût de fabrication très élevé de ceux-ci.

On connaît, du brevet allemand DE-AS 1 119 903 un frotteur de captation de courant par la partie inférieure d'un rail d'alimentation en courant. Ce frotteur est du type pantographe et présente à cet effet des éléments élastiques sous forme de ressorts en S à contre-sens, dont la fonction est de venir appuyer contre le rail de captation de courant. Il s'agit très vraisemblablement d'ailleurs d'un rail présentant la forme d'un U inversé de manière à guider latéralement le pantographe.

Un tel dispositif ne convient pas au cas d'un rail de captation de courant dans lequel le courant est capté par la partie supérieure. En effet, la structure n'est pas guidée latéralement car elle présente une action préférentielle selon un seul axe, d'où la nécessité en pratique de mettre en oeuvre des rails en forme de U inversé. En outre, le frotteur selon le brevet précitè est coûteux à fabriquer et long à monter.

On connaît aussi, du brevet américain US-A-3 509 292 un frotteur de captation du courant par la partie supérieure d'un rail d'alimentation en courant. Le frotteur présente à cet effet des éléments élastiques sous forme de lamelles de constante de raideur différentes, assemblées de façon à constituer un bras reliant la semelle de contact frottant sur le rail de captation de courant à un support fixé sur une poutre solidaire d'un boggie. La fonction dudit bras étant d'appuyer sur le rail de captation de courant et de minimiser les interruptions de contact du fait des irrégularités de la surface de celui-ci.

Un tel dispositif est conçu de telle sorte que le bras agit dans un plan orthogonal à la direction du rail. Le dispositif ainsi constitué est complexe, encombrant, et si il présente certaines aptitudes à absorber des irrégularités, il reste très exposé aux chocs subis lors du passage du matériel roulant sur des coupons. Le frotteur selon ce brevet est aussi long à monter et coûteux à fabriquer et à entretenir.

L'invention a pour objet de pallier les inconvénients de la technique en proposant un frotteur peu coûteux, résistant aux chocs inhérents à leur utilisation, de conception simple et dont le coût d'entretien est réduit.

A cet effet l'invention propose un frotteur de captation de courant fourni par un rail électrifié, notamment pour véhicule roulant ferré, comprenant une semelle de contact destinée à venir appuyer sur ledit rail électrifié, un moyen amortisseur solidaire du véhicule et relié à la semelle de contact, le moyen amortisseur étant constitué d'une paire d'éléments supports de forme parallélépipédique sensiblement identiques et disposés l'un au-dessus de l'autre et reliés entre eux par des pièces déformables élastiques, caractérisé en ce que lesdites pièces (10) sont des plaques de forme sensiblement rectangulaire et travaillant en flexion et disposées sur chacun des côtés des éléments supports pour relier deux à deux les côtés conjugués desdits éléments supports en formant des entretoises.

Le système déformable constitué des éléments de support et des plaques contribue à maintenir en dynamique la pression de contact nécessaire de la semelle sur le rail d'alimentation en courant. Cette pression vient s'ajouter au poids de la semelle qui est à lui seul suffisant pour maintenir une pression suffisante en statique, tout en assurant une bonne tenue aux déformations latérales et longitudinales pendant le roulement du véhicule ferroviaire. Le système déformable ainsi constitué est facilement interchangeable ce qui permet de diminuer les coûts d'entretien des frotteurs. Les plaques déformables élastiques présentent une meilleure résistance aux chocs, notamment aux chocs latéraux, que les bras articulés et sont d'une conception et d'un coût réduit ce qui diminue le coût global du frotteur et augmente sa durée d'utilisation.

D'autres caractéristiques et avantages de l'invention apparaîtront encore mieux à la lecture de la description qui suit d'un exemple de réalisation préférentielle de l'invention accompagnée des dessins dans lesquels:
- la figure 1 représente un véhicule roulant ferré équipé du frotteur selon l'invention,
- la figure 2 représente plus particulièrement le frotteur selon l'invention.

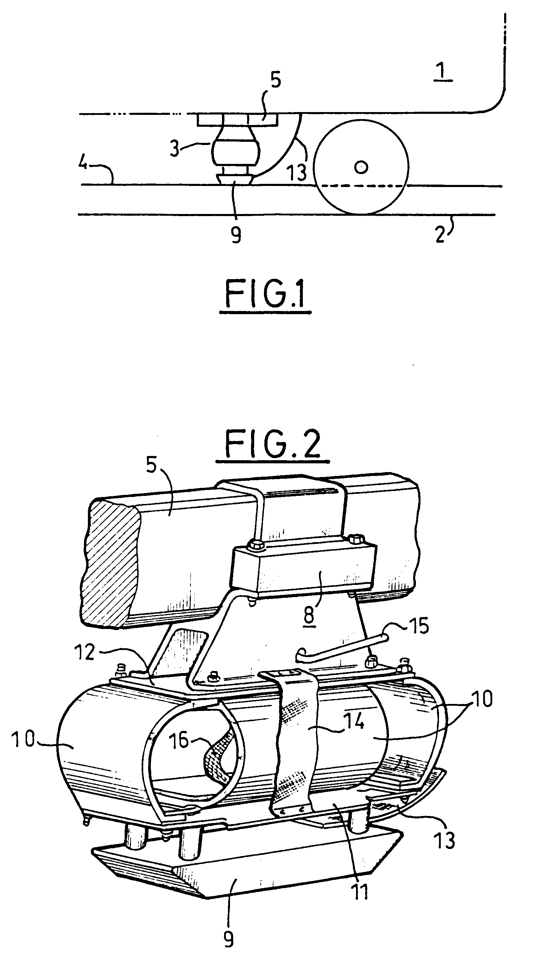

En se reportant à la figure 1, on a représenté un véhicule (1) roulant sur des rails de guidage (2) et alimenté en courant par un frotteur (3) de captation du courant fourni par un troisième rail (4), le frotteur de captation du courant étant par exemple fixé à une poutre (5) solidaire du boggie et disposée sous la caisse du véhicule en vis à vis du troisième rail (4).

Le frotteur selon l'invention comprend un ensemble de fixation (8) bridé sur la poutre (5), une semelle (9) et un moyen amortisseur entre l'ensemble de fixation et la semelle pour maintenir la semelle (9) en contact avec le troisième rail (4) pendant le roulement du véhicule. Le véhicule ferroviaire est alimenté en courant par un câble de liaison (13) relié à la semelle de contact (9).

En se reportant maintenant à la figure 2, la semelle de contact (9) est fixée à un support inférieur (11) constitué d'une plaque rigide de forme rectangulaire par des moyens de fixation, par exemple quatre vis et entretoises. Le support inférieur (11) est lui-même maintenu à un support supérieur (12) de forme sensiblement identique et solidaire de l'ensemble de fixation (8) par un jeu de plaques (10), en matière déformable élastique incombustible et isolante électriquement, formant entretoise et fixées sur des extrémités conjuguées des deux supports, par exemple à l'aide de contreplaques et de vis ou analogue. Sur cette figure, on a représenté trois des quatre plaques (10) disposées sur chacun des quatre côtés des éléments de support rectangulaire pour assurer une bonne tenue aux déformations tant latérales que longitudinales pendant le roulement.

Les plaques (10), de forme sensiblement rectangulaire, sont courbées pour jouer le rôle d'un amortisseur et travaillent en flexion dans une direction perpendiculaire au plan des supports (11, 12) pour maintenir la semelle (9) en contact sur le troisième rail (4) avec une pression de contact suffisante pendant le roulement du véhicule.

Les plaques (10) peuvent par exemple être constituées de deux couches d'EPDM (éthylène propylène diène monomère) assemblées l'une à l'autre par l'intermédiaire d'une armature en fibres polyester, permettant d'assurer une élasticité et une résistance suffisantes.

Deux lanières latérales (14) en matière isolante et incombustible disposées symétriquement par rapport à l'axe longitudinal des supports (11,12) relient les supports inférieur et supérieur pour stabiliser la semelle de contact (9) lorsque le véhicule circule dans des zones de non captation du courant et limiter ou annuler l'effort de traction vertical auquel sont soumises les plaques (10) sous l'effet du poids de la semelle (9) suspendue dans le vide.

La semelle (9) est relevée en cas de besoin en manoeuvrant un levier de relevage (15) actionnant une came (non représentée) intégrée à l'ensemble de fixation (8) qui agit par rotation sur une tresse de relevage (16) isolante et incombustible fixée par une de ses extrémités au support inférieur (11), de préférence au centre de celui-ci. La commande en rotation de la came sous l'action du levier permet la montée ou la descente de la semelle pour ouvrir ou fermer le contact électrique.

Ainsi, les seuls éléments d'usure du frotteur constitués par le système déformable et la semelle de contact peuvent être changés facilement et à faible coût de par la conception simple de cet ensemble.

## Revendications

1. Frotteur de captation de courant fourni par un rail électrifié, notamment pour véhicule roulant ferré, comprenant une semelle de contact destinée à venir appuyer sur ledit rail électrifié, un moyen amortisseur solidaire du véhicule et relié à la semelle de contact, le moyen amortisseur étant constitué d'une paire d'éléments supports (11, 12) de forme parallélépipédique sensiblement identiques et disposés l'un au-dessus de l'autre et reliés entre eux par des pièces déformables élastiques, caractérisé en ce que lesdites pièces (10) sont des plaques de forme sensiblement rectangulaire et travaillant en flexion et disposées sur chacun des côtés des éléments supports (11, 12) pour relier deux à deux les côtés conjugués desdits éléments supports (11, 12) en formant des entretoises.

2. Frotteur selon la revendication 1 caractérisé en ce que le moyen amortisseur est fixé à une poutre (5) solidaire d'un boggie.

3. Frotteur selon une des revendications 1 ou 2 comprenant en outre deux lanières de stabilisation (14) disposées symétriquement par rapport à l'axe longitudinal des dits éléments de support (11,12) et reliant ceux-ci.

4. Frotteur selon la revendication 3 comprenant en outre un moyen de manoeuvre (15) disposé dans l'ensemble de fixation (8) et une tresse de liaison (16) reliant l'élément de support inférieur (11) au moyen de manoeuvre pour relever l'élément de support inférieur.

5. Frotteur selon L'une quelconque des revendications précédentes dans lequel les plaques (10) sont en une matière incombustible et isolante électriquement.

6. Frotteur selon une des revendications précédentes dans lequel les pièces (10) sont en matériau élastique.

7. Utilisation d'un frotteur selon l'une quelconques des revendications précédentes pour la captation du courant électrique dans un véhicule roulant ferré.

## Claims

1. A collector shoe, to collect current supplied by an electrified rail, in particular for a railway vehicle, comprising a contact sole intended to rest against the said electrified rail, and a damping means integral with the vehicle and connected to the contact sole, the said damping means comprising a pair of substantially identical supporting members (11, 12) of parallelepipedic form, arranged one above the other and interconnected via deformable resilient parts, **characterised in that** the said parts (10) are plates, substantially rectangular in shape, functioning by bending and arranged on each of the sides of the supporting members (11, 12) to link the corresponding sides of the said supporting members (11, 12) in pairs, the said plates forming spacing members.

2. A collector shoe in accordance with claim 1, **characterised in that** the damping means is secured to a beam (5) integral with a bogie.

3. A collector shoe in accordance with one of claims 1 or 2, additionally comprising two stabilising straps (14) arranged symmetrically in relation to the longitudinal axis of the said supporting members (11, 12) and connecting the same.

4. A collector shoe in accordance with claim 3, additionally comprising control means (15) arranged in the securing assembly (8), and a connecting braid (16) linking the lower supporting member (11) to the control means in order to raise the lower supporting member.

5. A collector shoe in accordance with any one of the preceding claims, wherein the plates (10) are made from an incombustible and electrically insulating material.

6. A collector shoe in accordance with one of the preceding claims, wherein the parts (10) are made of a resilient material.

7. Use of a collector shoe in accordance with any one of the preceding claims, for collecting electric current in a railway vehicle.

## Patentansprüche

1. Schleifstück zur Abnahme von Strom, der über eine elektrifizierte Schiene zugeführt wird, insbesondere für ein rollendes Eisenfahrzeug, mit einer Kontaktplatte, die auf die elektrische Schiene gedrückt wird, einem am Fahrzeug befestigten und an der Kontaktplatte befestigten Dämpfungsmittel, das aus zwei im wesentlichen gleichen Tragelementen (11, 12) in Form eines Parallelepipeds besteht, die übereinander angeordnet und durch verformbare elastische Stücke verbunden sind, **dadurch gekennzeichnet**, daß die Stücke (10) etwa rechteckige Platten sind und unter Verbiegung arbeiten und auf allen Seiten der Tragelemente (11, 12) angeordnet sind, um die einander zugeordneten Seiten der Tragelemente (11, 12) unter Bildung von Distanzstücken zu verbinden.

2. Schleifstück nach Anspruch 1, dadurch gekennzeichnet, daß das Dämpfungsmittel an einem Träger (5) befestigt ist, der mit einem Fahrgestellt verbunden ist.

3. Schleifstück nach Anspruch 1 oder 2, das außerdem zwei Stabilisierungsriemen (14) aufweist, die symmetrisch zu einer Längsachse der Tragelemente (11, 12) angeordnet sind und diese verbinden.

4. Schleifstück nach Anspruch 3, das außerdem ein manuell betätigbares Mittel (15), das in der Befestigungsanordnung (8) angeordnet ist, und ein Verbindungsgeflecht (16) aufweist, das das untere Tragelement (11) mit dem manuell betätigbaren Mittel verbindet, um das untere Tragelement anzuheben.

5. Schleifstück nach einem der vorstehenden Ansprüche, bei dem die Platten (10) aus einem unbrennbaren und elektrisch isolierenden Material bestehen.

6. Schleifstück nach einem der vorstehenden Ansprüche, bei dem die Stücke (10) aus elastischem Material bestehen.

7. Anwendung eines Schleifstücks nach einem der vorstehenden Ansprüche zur Abnahme von elektrischem Strom in einem rollenden Eisenfahrzeug.
